# EUROPEAN PATENT APPLICATION

(11) **EP 4 567 969 A1**
(43) Date of publication of application: **11.06.2025**
(21) Application number: 24217441.5
(22) Date of filing: 04.12.2024
(51) Int. Cl.: H01M 10/613, B60L 58/26, H01M 10/625, H01M 10/647, H01M 10/653, H01M 10/6551, H01M 10/6568, H01M 50/242, H01M 50/249

(54) **BATTERY PACK FOR AN ELECTRIC ROAD VEHICLE AND METHOD FOR THE COMPENSATION OF THE THICKNESS VARIATION OF AN ELECTROCHEMICAL CELL FOR SAID BATTERY PACK**

(30) Priority: 06.12.2023 IT 202300026052
(71) Applicant: FERRARI S.p.A., 41100 Modena (IT)
(72) Inventor: VENTURI, Enrico, 41100 MODENA (IT); DI COLA, Angelica, 41100 MODENA (IT); LIGABUE, Elena, 41100 MODENA (IT)
(74) Representative: Studio Torta S.p.A.

(57) **Abstract**

A battery pack (6, 6') for an electric road vehicle (1) is described, comprising: a casing (10)); at least a first electrochemical cell (11, 12) comprising, in turn, a cathode, an anode and a solid electrolyte electrically connected to the cathode and to the anode; the first cell (11, 12) has a thickness (L) along a direction (X) increasing following the activation of the first cell (11); the first cell (11, 12) is housed inside the casing (10); a compartment (15, 15') defined by the casing (10) and designed to permit the thickness variation of the first cell (11, 12); and feeding means (50) designed to feed a fluid into the compartment (15, 15') with an adjustable pressure so as to exert a corresponding adjustable pressure (P) on the first cell (11, 12).

## Description

### CROSS-REFERENCE TO RELATED APPLICATIONS

This patent application claims priority from Italian patent application no. 102023000026052 filed on December 6, 2023, the entire disclosure of which is incorporated herein by reference.

### TECHNICAL FIELD

The present invention concerns a battery pack for an electric road vehicle.

The present invention also concerns a method for the compensation of the thickness variation of an electrochemical cell for a battery pack for an electric or hybrid road vehicle.

### BACKGROUND

The expression "electric road vehicle" indicates in the present description and in the claims both solely electric road vehicles and also hybrid road vehicles, having electric motor and internal combustion engine, provided with at least one battery pack able to supply electric power.

The battery pack comprises, in a known manner, a plurality of electrochemical cells interconnected to one another in series and in parallel, thus obtaining the total voltage and energy density desired.

Each cell comprises, very briefly, a positive electrode commonly indicated as cathode, a negative electrode commonly indicated as anode, and a chemical substance commonly indicated as electrolyte in which the positive and negative electrodes are immersed.

The use of cells with solid state electrolyte and cells with metallic lithium anode, in order to obtain a high energy density ideal for the implementation of electric power in the automotive sector, is also known.

Each cell furthermore has a thickness inferior to the relative length and width.

Following the electrochemical reaction, the thickness of the cells with solid electrolyte inevitably increases during operation.

It is also necessary to guarantee that the solid electrolyte remains constantly in contact with the electrodes by exerting a pressure and, therefore, a force on the cell from the outside of the cell.

This force must be between a minimum value and a maximum value for the entire life of the battery, therefore also when the thickness of the cell increases during use.

In order to meet said requirements, the use of a containment structure is known, formed of elastically deformable compensation elements arranged in contact with the cells according to the direction of the thickness of said cells.

Said elements are able to vary their thickness elastically and therefore inevitably exert an increasing force on the cell as the cell thickness increases.

However, the latest generation cells have significant thickness variations and require the application of particularly high maximum force values right from the beginning of their working life and throughout operation of the battery pack.

This inevitably results in the use of cumbersome heavy rubber elements, thus negatively affecting the energy density and final weight of the battery pack.

The battery packs of known type further comprise a plurality of cooling fins interposed between the cells and designed to cool the cells.

More precisely, the battery packs have, proceeding along the thickness, a modular configuration, in which each module comprises sequentially a first cell, a layer of temperature-resistant and flame-resistant material, a compensation element, a second cell and a cooling fin.

The need is felt in the sector to ensure correct long-term operation of the solid electrolyte cells, while at the same time limiting overall weights and volumes in order to reduce the overall dimensions and weight of the battery pack.

The need is also felt in the sector to simplify as far as possible the construction design of the battery pack.

Lastly, the need is felt in the sector to cool the battery pack as efficiently as possible, in order to reduce the risk of uncontrolled temperature increases and thermal shocks caused by excessive temperatures and short circuits of the adjacent cells.

More precisely, the need is felt in the sector to exert an adjustable compression force value according to the operating conditions of the cells and, therefore, of the motor vehicle, for example by increasing the compression force if rapid recharging of the cells is necessary.

### SUMMARY

The object of the present invention is to provide a battery pack for an electric road vehicle, which meets in a simple inexpensive manner at least one of the above-mentioned needs.

The above-mentioned object is achieved by the present invention which concerns a battery pack for an electric or hybrid road vehicle as defined in claim 1.

The present invention concerns a method for the compensation of the thickness variation of an electrochemical cell for a battery pack for an electric or hybrid road vehicle as defined in claim 13.

### BRIEF DESCRIPTION OF THE DRAWINGS

For a better understanding of the present invention two embodiments are described below, purely by way of non-limiting example and with reference to the attached drawings, in which:
- figure 1 is a perspective view of a motor vehicle with a battery pack produced according to the teachings of a first embodiment of the present invention and only schematically illustrated;
- figure 2 is a front view of a casing of the battery pack of figure 1;
- figures 3, 4 and 5 are sections along respective lines III-III; IV-IV and V-V of figure 2;
- figure 6 is a view from below of the battery pack of figures 1 to 5;
- figures 7 and 8 are sections along respective lines VII-VII and VIII-VIII of figure 6;
- figure 9 is a front view of a casing of a second embodiment of the battery pack according to the invention;
- figure 10 is a view from below of the battery pack of figure 9;
- figure 11 is a section along the line XI-XI of figure 9; and
- figures 12 and 13 are sections along respective lines XII-XII and XIII-XIII of figure 10.

### DESCRIPTION OF EMBODIMENTS

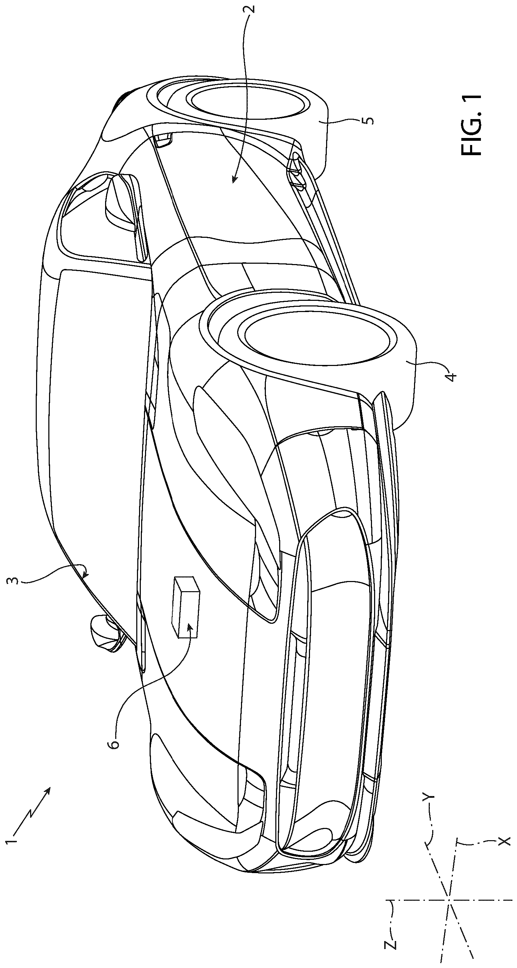

With reference to Figure 1, the number 1 indicates overall a road vehicle.

The road vehicle 1 is an at least partially electric vehicle.

The expression "at least partially electric vehicle" indicates in the present description both a solely electric road vehicle commonly known as BEV (Battery Electric Vehicle) and a road vehicle having electric motor and internal combustion engine, provided with at least one battery pack able to supply electric power.

In the following part of the present description, expressions such as "at the top", "at the bottom", "at the front", "at the rear", "left", "right" and similar are used with reference to a normal direction of travel of the motor vehicle 1.

It is also possible to define:
- a longitudinal axis X integral with the motor vehicle 1, arranged, in use, horizontal and parallel to a normal direction of travel of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

In further detail, the vehicle 1 comprises essentially:
- a body 2 defining a passenger compartment 3;
- a pair of front wheels 4 and rear wheels 5; and
- a battery pack 6.

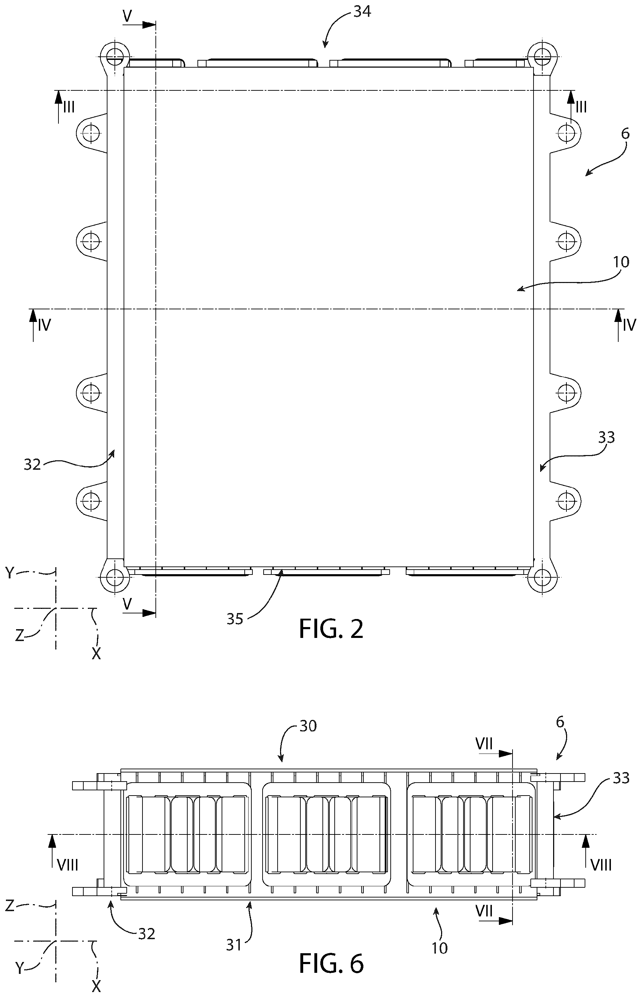

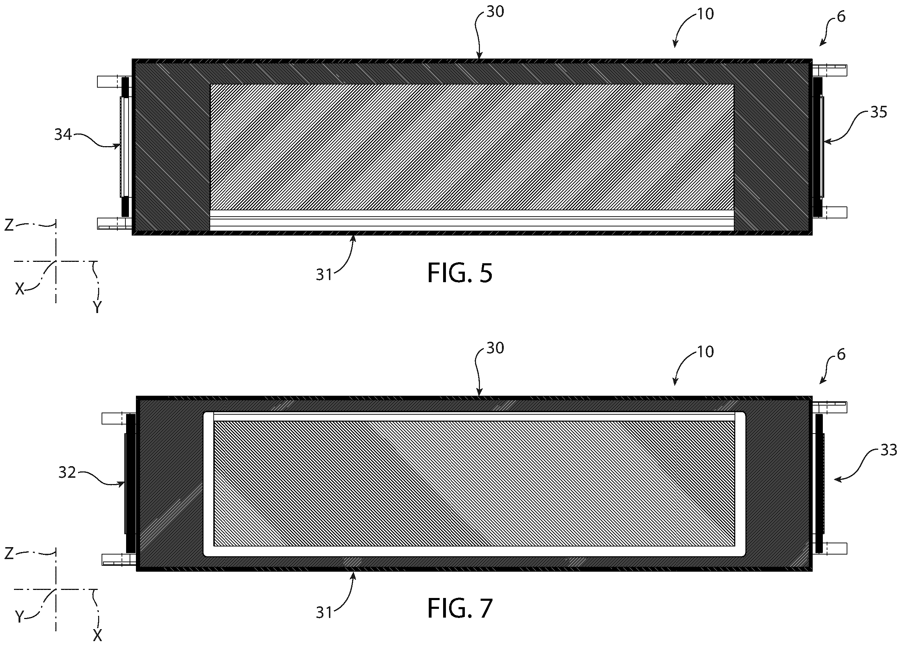

With reference to figures 2 to 8, the battery pack 6 comprises essentially:
- a casing 10; and
- a plurality of cells 11, 12 accommodated inside the casing 10 and interconnected to one another in series and in parallel in order to obtain the desired total voltage and energy density.

In particular, the cells 11, 12 are side by side parallel to the direction X.

Each cell 11, 12 comprises, very briefly and in a known manner: a positive electrode commonly indicated as cathode, a negative electrode commonly indicated as anode, and a chemical substance commonly indicated as electrolyte in which the positive and negative electrodes are immersed.

In further detail, the casing 10 is shaped like a parallelepiped.

The casing 10 has a length in a direction Y, a width in a direction X orthogonal to the direction Y and a height in a direction Z orthogonal to the directions Z, Y.

In particular, the height of the casing 10 is inferior to the length and width of the casing 10 itself.

Each cell 11, 12 is, in the case illustrated, prismatic.

Similarly, each cell 11, 12 has a length along the direction Y, a thickness L along the direction X and a height along the direction Z.

In particular, the thickness L of each cell 11, 12 along the direction X is inferior to the length and height of the cell 11 in the respective directions Y, Z. The casing 10 is delimited by:
- a pair of walls 30, 31 opposite each other along the direction Z and lying on respective planes orthogonal to the direction Z;
- a pair of walls 32, 33 opposite each other along the direction X, lying on respective planes orthogonal to the direction X, and interposed along the direction Z between the walls 30, 31; and
- a pair of walls 34, 35 opposite each other along the direction Y, lying on respective planes orthogonal to the direction Y and interposed along the direction Z between the walls 30, 31 and along the direction X between the walls 32, 33.

The walls 32, 33 can be made of electrically insulating material.

Following the electrochemical reaction, the thickness L of the cells 11, 12 parallel to the axis X increases during operation, from taking on a value Lbol at the beginning of use of the cells 11, 12 to taking on a value Leol at the end of the working life of the cells 11, 12.

Advantageously, the battery pack 6 further comprises:
- a plurality of compartments 15 defined by the casing 10 and cooperating with the cells 11, 12, and designed to allow thickness variation of the cells 11, 12; and
- feeding means 50 designed to feed a fluid into the compartments 15 with an adjustable pressure so as to exert a variable pressure p along the direction X on the cells 11, 12.

Said pressure p ensures that the solid electrolyte remains in contact with the anode and the cathode.

In further detail, the feeding means 50 are controlled to increase the pressure value p inside the compartment 15 according to the operating conditions of the battery pack 6 and, therefore, of the cells 11, 12.

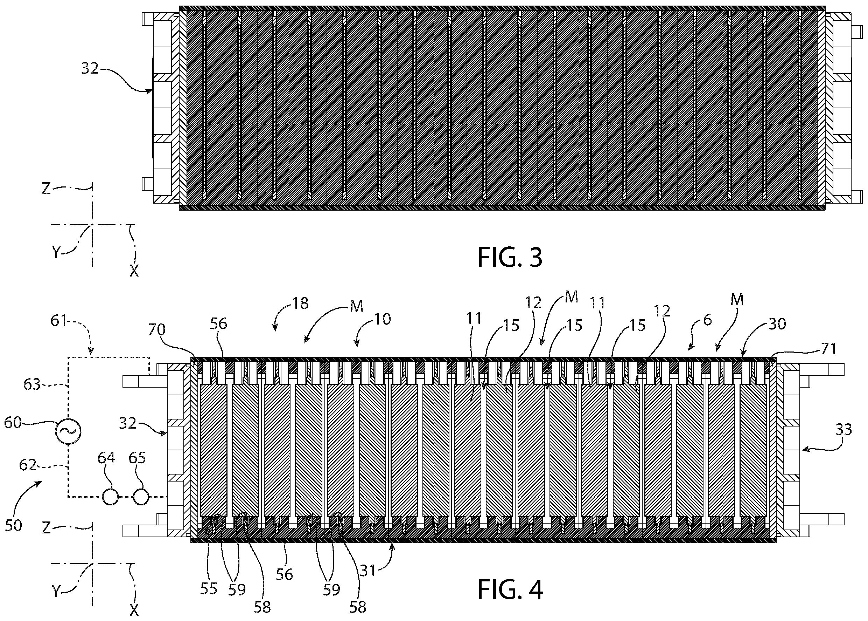

For example, if it is necessary to rapidly recharge the cells 11, 12, the feeding means 50 comprise (Figure 4):
- a tank 64 filled with the fluid;
- a pump 60 that can be operated to generate a variable delivery pressure on said fluid; and
- a feeding circuit 61 (only schematically illustrated) of the fluid defining a suction line 62 of the pump 60 and a delivery line 63 of the pump 60 so as to feed the fluid into the compartments 15.

The suction line 62 is connected to the tank 64.

The fluid is preferably a dielectric liquid.

Preferably, the feeding means 50 are arranged outside the casing 10.

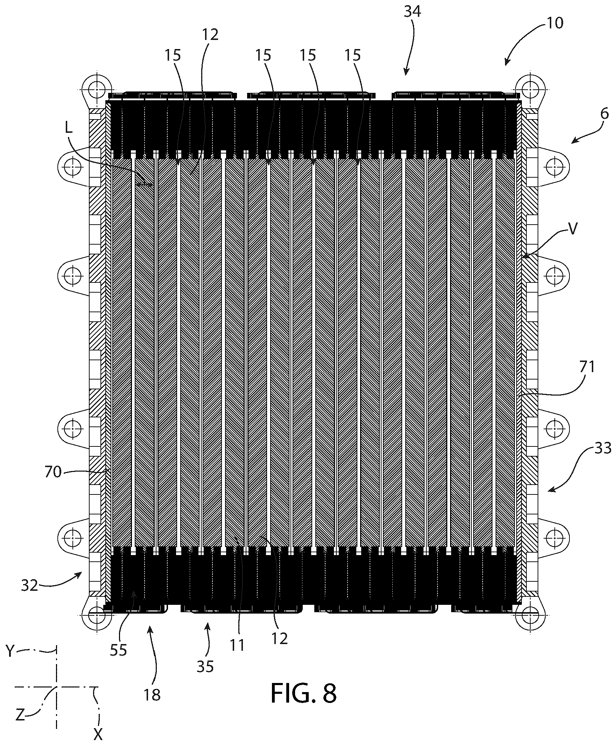

With reference to Figure 8, the compartments 15 have a length along the direction Y, a thickness along the direction X and a height along the direction Z.

In particular, the thickness of the compartments 15 along the direction X is inferior to the length and height of the compartment 15 along the respective directions Y, Z.

The thickness of the compartments 15 is, furthermore, inferior to the thickness of the cells 11, 12 parallel to the direction X.

The cells 11, 12 and the compartments 15 define a modular structure 18 accommodated within the casing 10.

In further detail, the modular structure 18 comprises a plurality of modules M repeated sequentially along the direction X.

Each module M comprises, proceeding along the direction X (Figure 4):
- a cell 11;
- a compartment 15;
- a cell 12; and
- a compartment 15.

With reference to Figure 4, the battery pack 6 further comprises a support structure 55 for the cells 11, 12 provided to keep in position the cells 11, 12 with respect to the casing 10.

The structure 55 comprises at least a plurality of seats 58 engaged by respective ends 59 of corresponding cells 11, 12. In particular, the end 59 axially delimits the respective cell 11, 12 along the axis Z.

Each end 59 delimits the relative cell 11, 12 axially with respect to the axis Z.

The battery pack 6 defines in a fluid-tight manner a volume V comprising the compartments 15 and the circuit 61.

The volume V isolates in a fluid-tight manner the compartments 15 from the outside of the casing 10 and allows fluidic communication with the delivery and suction lines 62, 63 of the circuit 61.

With reference to Figure 4, the volume V is delimited by:
- a pair of walls 70, 71 spaced apart from each other along the axis X, parallel to each other and lying orthogonal to the axis X;
- the walls 30, 31; and
- the walls 32, 33.

The walls 30, 70 are crossed in a fluid-tight manner by the delivery line 62 and suction line 63 of the circuit 61.

Each wall 70, 71, in further detail, extends between the walls 34, 35.

Each wall 70, 71 further extends between the walls 30, 31 (Figures 3 and 4) .

The walls 70, 71 are fixed to respective walls 32, 33 of the casing 10 in a fluid-tight manner.

Each wall 70, 71 is, in particular, interposed between a relative compartment 15 immediately adjacent to it and the relative wall 32, 33.

The walls 70, 71 isolate in a fluid-tight manner the compartments 15 from the environment surrounding the casing 10.

In the embodiment illustrated, the fluid is a heat transfer fluid and removes heat from the cells 11, 12.

In said embodiment, the circuit 61 further comprises (Figure 4) a heat exchanger 65 (also only schematically illustrated) designed to cool the heat transfer fluid heated by the bodies 21.

More precisely, the pump 60 can be operated to generate a continuous circulation of the heat transfer fluid inside the circuit 60. The heat transfer fluid flows along the delivery line 63 towards the compartments 15 at a lower temperature, is heated inside the compartments 15 and flows along the suction line 62 at a higher temperature as far as the heat exchanger 65.

The fluid returns to the lower temperature inside the heat exchanger 65 and then returns towards the tank 64.

In use, the cells 11, 12 electrically connected to each other generate the energy voltage and density required of the battery pack 6 by means of an electrochemical reaction that takes place in the respective anode and cathode.

During operation of the cells 11, 12, the pump 60 sends the fluid into the compartment 15 at a given pressure level, according to the operating conditions of the cells 11, 12 and, therefore, of the motor vehicle 1.

The fluid in the compartments 15 ensures a uniform parallel pressure level P on the cells 11, 12. This allows a constant contact to be maintained between the electrolyte and the respective anode and cathode.

If rapid recharging of the battery pack 6 is necessary, the feeding means 50 feed the fluid into the compartments 15 at an increased pressure value.

At the same time, the fluid inside the compartments 15 thermally dissipates the heat generated by operation of the cells 11, 12, allowing the battery pack 6 to resist uncontrolled temperature increases and the resulting thermal shocks.

In further detail, the pump 60 determines a continuous circulation of the heat transfer fluid inside the circuit 61 thus cooling the cells 11, 12.

More precisely, the pump 60 sends the heat transfer fluid along the delivery line 63 towards the compartments 15 at a lower temperature, it is heated inside the compartments 15 and flows along the suction line 62 at a higher temperature as far as the heat exchanger 65.

The fluid returns to the lower temperature inside the heat exchanger 65 and then returns towards the tank 64.

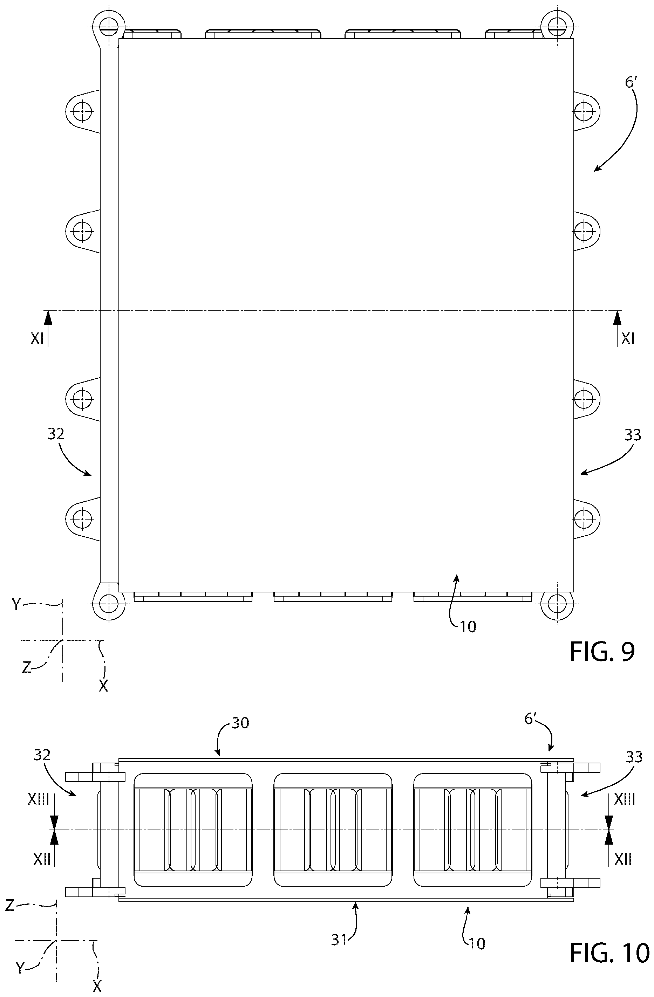

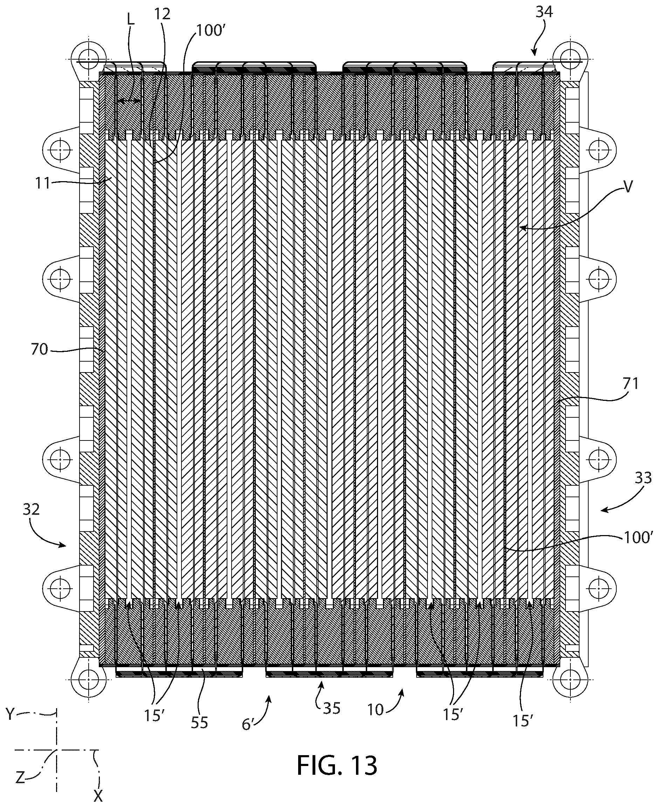

With reference to Figures 9 to 13, the number 6' indicates a battery pack according to a further embodiment of the invention.

The battery pack 6' is similar to the battery pack 6 and will be described below only insofar as it differs from the latter; equal or equivalent parts of the battery packs 6, 6' will be identified, where possible, by the same reference numbers.

In further detail, the battery pack 6' differs from the battery pack 6 due to the fact that it comprises a plurality of walls 100' lying on respective planes orthogonal to the axis X, fixed to the support structure 55 at its axial ends opposite each other along the axis Z, and interposed between the walls 32, 33 along the axis X.

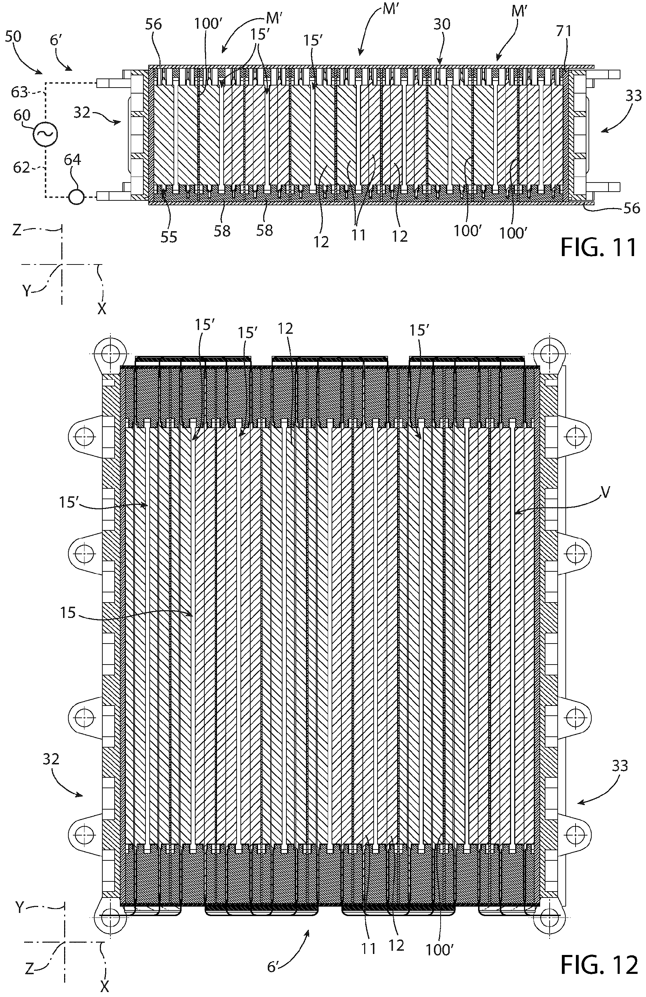

The battery pack 6' furthermore differs from the battery pack 6 due to the fact that the module M' differs from the module M due to the fact that it comprises (Figure 12):
- a cell 11 within which a first wall 100' extends;
- a compartment 15'; and
- a cell 12 within which a second wall 100' extends.

The walls 100' constrain the cells 11, 12 with reference to a flexional deformation in the plane defined by the axes Y, Z.

The walls 100' are preferably fixed to the cells 11, 12, for example by means of adhesives, thus also preventing movement of the cells 11, 12 parallel to the axes X, Y, Z.

Preferably, each cell 11, 12 is a pouch cell.

The walls 100' are made of thermally conductive material and define respective cooling fins designed to remove heat from the cells 11, 12.

The battery pack 6' furthermore differs from the battery pack 6 due to the fact that the fluid in the compartments 15, 15' may not be a heat transfer fluid, not circulate continuously in the circuit 61' and not remove heat from the cells 11, 12.

The circuit 61' may therefore not comprise the heat exchanger 65.

The operation of the battery pack 6' is similar to that of the battery pack 6 and is therefore described in detail only insofar as it differs from the latter.

The operation of the battery pack 6' differs from that of the battery pack 6 due to the fact that the cell 11, 12 is also supported laterally by the walls 100', and due to the fact that the walls 100' performing the functions of cooling fins remove heat from the cells 11, 12.

The operation of the battery pack 6' furthermore differs from that of the battery pack 6 due to the fact that the pump 60 is operated only to send the fluid at a desired pressure value into the delivery line 62 of the circuit 61' and compartments 15, without determining a continuous circulation of fluid inside the circuit 61.

From an examination of the battery pack 6, 6' and the method according to the present invention, the advantages it offers are evident.

In particular, the compartments 15, 15' cooperating with the cells 11 are filled with the fluid at an adjustable pressure, thus exerting an adjustable pressure value p on the cells 11, 12 during the working life of the battery pack 6.

It is thus possible to eliminate the containment structures present in the battery packs of known type and described in the introductory part of the present invention, with consequent reduction in overall dimensions, weights and costs of the battery pack 6, 6'.

Moreover, it is possible to adjust the pressure p according to the operating state and conditions of the cells 11, 12 and/or of the motor vehicle 1.

For example, if it is necessary to rapidly recharge the cells 11, 12, the pump 60 increases the pressure inside the compartments 15.

At the same time, the fluid inside the compartments 15 thermally dissipates the heat generated by the operation of the cells 11, 12.

It is thus possible to eliminate the cooling plate present in the solutions of known type and described in the introductory part of the present description.

This further reduces the weight and overall dimensions of the battery pack 6, 6', at the same time guaranteeing efficient cooling and avoiding uncontrolled temperature increases and the resulting thermal shocks.

Lastly, it is clear that modifications and variations that do not depart from the protective scope defined by the claims can be made to the battery pack 6, 6' and to the method described and illustrated here.

In particular, the feeding means 50 could comprise a compressor instead of the pump 60 and the tank 64 would be filled in the upper part with air and in the lower part with a liquid performing the function of the fluid to be sent into the compartments 15.

The compressor would be controlled so as to adjust the air pressure in the upper part of the tank 64 and consequently adjust the piezometric head acting on the liquid inside the tank 64 and in the compartments 15.

The battery pack 6, 6' could further comprise a plurality of layers made of material resistant to high temperature and to thermal shock, for example mica, lying on a plane substantially orthogonal to the direction X and spaced apart from one another along the direction.

In said variation, each module M would comprise a layer made of temperature-resistant and flame-resistant material interposed between each pair of cells 11, 12.

The walls 100' of the battery pack 6' could, furthermore, be made of a heat insulating material.

In this case, the walls 100' would perform only the function of further constraining the cells 11, 12, limiting the inflection thereof in the plane defined by the axes X, Z due for example to a gradient between the pressures existing in the compartments 15.

In this case, the battery pack 6' would further comprise a circuit 61 identical to that of the battery pack 6 and the fluid that flows in the circuit 61 would be a heat transfer fluid.

## Claims

1. A battery pack (6, 6') for an electric road vehicle (1), comprising:
- a casing (10);
- at least one first electrochemical cell (11, 12) comprising, in turn, a cathode, an anode and a solid electrolyte electrically connected to said cathode and anode; said first cell (11, 12) having a first thickness (L) along a first direction (X) increasing, in use, following the activation of said first cell (11, 12); said first cell (11, 12) being accommodated inside said casing (10);
**characterized in that** it comprises:
- at least one compartment (15) defined by said casing (10) and designed to permit the thickness variation of said first cell (11, 12); and
- feeding means (50) designed to feed a fluid into said compartment (15, 15') with an adjustable pressure so as to exert a corresponding further adjustable pressure (p) along said first direction (X) upon said first cell (11, 12).

2. The battery pack according to claim 1, **characterized in that** said feeding means (50) comprise:
- a pump (60); and
- a circuit (61), which defines a delivery line (62) and a suction line (63) of said pimp (60) fluidly connected to said compartment (15, 15') and along which said pump (60) is interposed;
said pump (60) being controllable so as to make said fluid available at said pressure to said delivery line (62).

3. The battery pack according to claim 2, **characterized in that** it defines a fluid-tight isolated volume (V) formed by said compartment (15, 15') and by said circuit (61).

4. The battery pack according to claim 3, **characterized in that** said volume (V) is delimited by:
- a pair of first walls (70, 71) fixed to said casing (10) in a fluid-tight manner and spaced apart from one another parallel to said first direction (X); and
- a pair of second walls (30, 31) defined by said casing (10) and spaced apart from one another parallel to a second direction (Z) orthogonal to said first direction (X);
said first cell (10, 11) and said compartment (15, 15') being interposed between said first walls (70, 71) along said first direction (X) and between said second walls (30, 31) along said second direction (Z).

5. The battery pack according to any one of the preceding claims, **characterized in that** said fluid is a heat transfer fluid thermally coupled to said first cell (11, 12) so as to remove, in use, heat from said first cell (11, 12).

6. The battery pack according to claim 5, **characterized in that** said fluid is a dielectric liquid.

7. The battery pack according to claim 5 or 6, **characterized in that**:
- said pump (60) can be operated to determine a continuous flow of said fluid within said circuit (61); and
- said circuit (61) comprises a heat exchanger (65) interposed between said suction line (63) and said pump (60).

8. The battery pack according to any one of the preceding claims, **characterized in that** it comprises a second electrochemical cell (12, 11); said compartment (15, 15') being interposed along said first direction (X) between said first cell (11, 12) and second cell (12, 11).

9. The battery pack according to claim 8, **characterized in that** said casing (10) further comprises a plurality of third walls (100') spaced apart from one another along said first direction (X) and going through respective first and second cells (11, 12; 12, 11).

10. The battery pack according to claim 9, when it depends on any one of the claims from 1 to 4, **characterized in that** said third walls (100') are made of a thermally conductor material and define respective cooling fins configured to cool said first cell (11, 12) and second cell (12, 11).

11. The battery pack according to claim 9 or 10, when it depends on any one of the claims from 1 to 4, **characterized in that** said third walls (100') define mechanical constraints for the first cell (11, 12) and second cell (12, 11).

12. An electric or hybrid road vehicle (1), comprising a battery pack (6, 6') according to any one of the preceding claims.

13. A method for the compensation of the variation of a thickness (L) along a direction (X) of an electrochemical cell (11, 12) for a battery pack (6, 6') for an electric or hybrid road vehicle (1);
- said cell (11, 12) comprising, in turn, a cathode, an anode and a solid electrolyte electrically connected to said cathode and anode and being accommodated in a casing (10);
said method comprising the steps of:
i) activating said cell (11, 12) so as to determine an increase in said thickness (L) of the cell (11, 12) along said direction (X) ;
**characterized in that** it comprises the step ii) of feeding a fluid into a compartment (15, 15') cooperating with said cell (11, 12) with an adjustable pressure, so as to exert a corresponding adjustable pressure (p) along said direction (X) upon said first cell (11, 12);
said compartment (15, 15') being defined by said casing (10).

14. The method according to claim 13, **characterized in that** said step ii) comprises the step iii) of feeding a heat transfer fluid into said compartment (15, 15') in order to cool said cell (11, 12).

15. The method according to claim 13 or 14, **characterized in that** said step ii) comprises the step iv) of causing said fluid to flow within a circuit (61), along which a pump (60) and a heat exchanger (65) are arranged.

16. The method according to any one of the claims from 13 to 15, **characterized in that** it comprises the step v) of tightly isolating said fluid inside a volume (V) delimited by said casing (10) and by said circuit (61).
